(19) Europäisches Patentamt
European Patent Office
Office européen des brevets

(11) EP 2 382 268 B1

(12) **EUROPÄISCHE PATENTSCHRIFT**

(45) Veröffentlichungstag und Bekanntmachung des Hinweises auf die Patenterteilung:
**07.10.2015 Patentblatt 2015/41**

(21) Anmeldenummer: **09795706.2**

(22) Anmeldetag: **15.12.2009**

(51) Int Cl.:
***C08L 69/00*** *(2006.01)* ***C08K 3/36*** *(2006.01)*

(86) Internationale Anmeldenummer:
**PCT/EP2009/008965**

(87) Internationale Veröffentlichungsnummer:
**WO 2010/072350 (01.07.2010 Gazette 2010/26)**

(54) **FLAMMGESCHÜTZTE SCHLAGZÄHMODIFIZIERTE POLYCARBONAT-ZUSAMMENSETZUNGEN**

FLAME-PROTECTED IMPACT STRENGTH MODIFIED POLYCARBONATE COMPOUNDS

COMPOSITIONS POLYCARBONATES IGNIFUGES À RÉSILIENCE MODIFIÉE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **23.12.2008 DE 102008062945**

(43) Veröffentlichungstag der Anmeldung:
**02.11.2011 Patentblatt 2011/44**

(73) Patentinhaber: **Bayer Intellectual Property GmbH
40789 Monheim (DE)**

(72) Erfinder:
- **TASCHNER, Vera
50823 Köln (DE)**
- **ECKEL, Thomas
41540 Dormagen (DE)**
- **FELDERMANN, Achim
40597 Düsseldorf (DE)**
- **WENZ, Eckhard
50931 Köln (DE)**
- **WITTMANN-Dieter
51375 Leverkusen (DE)**

(74) Vertreter: **BIP Patents
c/o Bayer Intellectual Property GmbH
Alfred-Nobel-Straße 10
40789 Monheim am Rhein (DE)**

(56) Entgegenhaltungen:
**DE-A1-102006 012 990**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 382 268 B1

## Beschreibung

Die vorliegende Erfindung betrifft schlagzähmodifizierte Polycarbonat-Zusammensetzungen, welche ein Pfropfpolymerisat enthaltend Silikonacrylat-Komposit-Kautschuk als Pfropfgrundlage, wobei der Anteil an Silikonkautschuk 65 - 95 Gew.-% (bezogen auf die Pfropfgrundlage) beträgt, Talk mit einen $d_{98}$-Wert (auch als "top cut" bezeichnet) von kleiner als 20 $\mu$m und phosphorhaltige Flammschutzmittel enthalten, die Verwendung der Polycarbonat-Zusammensetzungen zur Herstellung von Formkörpern und die Formkörper selbst.

US 2002/077417 A1 offenbart flammgeschützte Zusammensetzungen enthaltend (a) Polycarbonat, (b) Propfpolymer mit einem Silikonacrylat-Kompositkautschuk, wobei das Verhältnis von Silikon zu Acrylat 99:1 bis 1:99 beträgt, (c) gegebenenfalls Füllstoff wie beispielsweise Talk, (d) Phosphorsäureester als Flammschutzmittel, (e) gegebenenfalls weitere Additive wie beispielsweise ABS, SAN und Antidrippingmittel. Als Beispiele werden Zusammensetzungen enthaltend Metablen® S-2001 offenbart, welches ein Pfropfpolymer mit einer Pfropfgrundlage aus Silikon-Butylacrylat-Kompositkautschuk ist, welche aus ca. 17 Gew.-% Methylmethacrylat, ca. 9 Gew.-% Organosiloxan und ca. 74 Gew.-% Butylacrylat besteht. US 2002/077417 A1 offenbart aber nicht Zusammensetzungen enthaltend ein Pfropfpolymerisat mit einem Silikonacrylat-Komposit-Kautschuk als Pfropfgrundlage, wobei der Anteil an Silikonkautschuk 65 - 95 Gew.-% (bezogen auf die Pfropfgrundlage) beträgt, und Talk mit einen $d_{98}$-Wert von kleiner als 20 $\mu$m

JP-A 08-259791 offenbart flammgeschützte Zusammensetzungen enthaltend Polycarbonat und einen Silikonacrylatkautschuk mit 30-99% Siloxan.

JP-A 2000-017136 offenbart Zusammensetzungen enthaltend Polycarbonat, 1 bis 40 Gew.-% oligomere Phosphorsäureester und Pfropfpolymer mit einer Pfropfgrundlage aus Silikonacrylatkautschuk, welches 60-99 Gew.-% Polyorganosiloxan enthält, gegebenenfalls Polytetrafluorethylen und gegebenenfalls Talk. JP-A 2000-017136 offenbart aber nicht Zusammensetzungen enthaltend einen Talk mit einem $d_{98}$-Wert von kleiner als 20 $\mu$m

JP-A 2002-069282 offenbart Zusammensetzungen enthaltend Polycarbonat, Kompositkautschuk (wie beispielsweise Metablen® Sx005), oligomere Phosphorsäureester, Silikonöl, gegebenenfalls Polytetrafluorethylen und gegebenenfalls Additive. JP-A 2002-069282 offenbart aber nicht Zusammensetzungen enthaltend Talk.

WO-A 00/39210 offenbart Zusammensetzungen enthaltend Polycarbonat, Copolymer, oligomere Phosphorsäureester, Pfropfpoylmer (beispielsweise Metablen S2001) mit einem Silikonacrylatkautschuk als Pfropfgrundlage, wobei der Anteil an Polyorganosiloxan größer 50 Gew.-%, vorzugsweise größer 70 Gew.-% beträgt, gegebenenfalls Polytetrafluorethylen und einem Verstärkungsstoff wie beispielsweise Talk. WO-A 00/39210 offenbart aber nicht Zusammensetzungen enthaltend einen Talk mit einem $d_{98}$-Wert von kleiner als 20 $\mu$m.

EP-A 0 641 827 offenbart Zusammensetzungen enthaltend aromatisches Polycarbonat, Pfropfpoylmer von Vinylmonomer auf Dienkautschuk, Phosphorsäureester, Polytetrafluorethylen, anorganischen Füllstoff wie beispielsweise Talk und Kompositkautschuk aus Silikon- und Acrylatkautschuk. EP-A 0 641 827 offenbart aber nicht Zusammensetzungen enthaltend einen Talk mit einem $d_{98}$-Wert von kleiner als 20 $\mu$m.

JP-A 07316409 offenbart Zusammensetzungen enthaltend Polycarbonat, Phosphorsäureester, Pfropfpoylmer mit einem Silikonacrylatkautschuk als Pfropfgrundlage, wobei der Anteil an Polyorganosiloxan 1 - 99 Gew.-% und der Anteil an Polyalkyl(meth)acrylatkautschuk 99 - 1 Gew.-% betragen. JP-A 07316409 offenbart aber nicht Zusammensetzungen enthaltend einen Talk mit einem $d_{98}$-Wert von kleiner als 20 $\mu$m.

DE 10 2006 012 990 A1 offenbart flammgeschützte schlagzähmodifizierte Polycarbonat-Zusammensetzungen enthaltend ein Pfropfpolymerisat mit einer Pfropfgrundlage ausgewählt aus der Gruppe der Silikonkautschuke und Silikonacrylat Kautschuke, Talk, phosphorhaltiges Flammschutzmittel, eine oder mehrere Borverbindungen und Antitropfmittel. Die Verbindungen zeichnen sich durch eine gute Flammwidrigkeit und eine gute mechanische Festigkeit aus. Es werden aber nur verzweigte Polycarbonate beschrieben.

Aufgabe der vorliegenden Erfindung ist die Bereitstellung von flammgeschützten schlagzähmodifizierten Polycarbonat-Formmassen mit einer optimalen Kombination aus gutem Flammschutz, guter Chemikalien- und Hydrolysebeständigkeit und guten mechanischen Eigenschaften (d.h. insbesondere hoher E-Modul und hohe Kerbschlagzähigkeit $a_K$).

Es wurde somit überraschend gefunden, dass Zusammensetzungen enthaltend

A) 40 bis 99 Gew.-Teile, bevorzugt 59 bis 97 Gew.-Teile, besonders bevorzugt 65 bis 91 Gew.-Teile (jeweils bezogen auf die Summe der Gewichtsteile der Komponenten A+B+C+D) unverzweigtes aromatisches Polycarbonat und/oder unverzweigtes aromatisches Polyestercarbonat,

B) 0,5 bis 20 Gew.-Teile, bevorzugt 1 bis 12 Gew.-Teile, besonders bevorzugt 2 bis 8 Gew.-Teile (jeweils bezogen auf die Summe der Gewichtsteile der Komponenten A+B+C+D) Pfropfpolymerisat, dadurch gekennzeichnet, dass die Pfropfgrundlage ein Silikonacrylat-Komposit-Kautschuk aus Silikonkautschuk- und Polyalkyl(meth)acrylatkautschuk ist, mit

B.1 5 bis 95 Gew.-% eines oder mehrerer Vinylmonomeren auf

B.2 95 bis 5 Gew.-% eines oder mehrerer Silikonacrylat- Komposit-Kautschuke als Pfropfgrundlage, wobei der Silikonacrylat-Kautschuk

B.2.1 65 - 95 Gew.-% Silikonkautschuk- und

B.2.2 35 bis 5 Gew.-% Polyalkyl(meth)acrylatkautschuk enthält,

wobei sich die beiden genannten Kautschuk-Komponenten B.2.1 und B.2.2 im Komposit-Kautschuk gegenseitig durchdringen, so dass sie sich nicht wesentlich voneinander trennen lassen.

C) 0,1 bis 20 Gew.-Teile, bevorzugt 1 bis 15 Gew.-Teile, besonders bevorzugt 4 bis 12 Gew.-Teile (jeweils bezogen auf die Summe der Gewichtsteile der Komponenten A+B+C+D) Talk mit einen $d_{98}$-Wert (auch als "top cut" bezeichnet) von kleiner als 20 $\mu$m, bevorzugt kleiner als 15 $\mu$m, besonders bevorzugt kleiner als 8 $\mu$m,

D) 0,4 bis 20 Gew.-Teile, bevorzugt 4 bis 17 Gew.-Teile, besonders bevorzugt 8 bis 14 Gew.-Teile (jeweils bezogen auf die Summe der Gewichtsteile der Komponenten A+B+C+D) Flammschutzmittel ausgewählt aus mindestens einem der Gruppe bestehend aus Mono- und oligomeren Phosphor- und Phosphonsäureester, Phosphonatamine und Phosphazene,

E) 0 bis 20 Gew.-Teile, bevorzugt 0 bis 6,5 Gew.-Teile (bezogen auf die Summe der Gewichtsteile der Komponenten A+B+C+D) eines oder mehrere Polymere ausgewählt aus der Gruppe bestehend aus kautschukfreies Vinyl(Co)Polymerisat, Polyalkylenterephthalat und von Komponente B verschiedene Pfropfpolymerisate, besonders bevorzugt ist die Zusammensetzung frei von kautschukfreiem Vinyl(Co)Polymerisat, Polyalkylenterephthalat, und/oder von Komponente B verschiedene Pfropfpolymerisate,

F) 0,5 bis 25 Gew.-Teile (jeweils bezogen auf die Summe der Gewichtsteile der Komponenten A+B+C+D) Zusatzstoffe wie Flammschutzsynergisten, Antidrippingmittel, Gleit- und Entformungsmittel, Nukleiermittel, Stabilisatoren, Antistatika, Säuren, sowie Farbstoffe und Pigmente,

wobei alle Gewichtsteilangaben in der vorliegenden Anmeldung so normiert sind, dass die Summe der Gewichtsteile der Komponenten A+B+C+D in der Zusammensetzung 100 ergeben,
die oben genannte technische Aufgabe lösen.

**Komponente A**

Erfindungsgemäß geeignete unverzweigte aromatische Polycarbonate und/oder unverzeigte aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z. B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen. Ebenso ist eine Herstellung über ein Schmelzepolymerisationsverfahren durch Umsetzung von Diphenolen mit beispielsweise Diphenylcarbonat möglich.

Diphenole zur Herstellung der aromatischen Polycarbonate und/oder aromatischen Polyestercarbonate sind vorzugsweise solche der Formel (I)

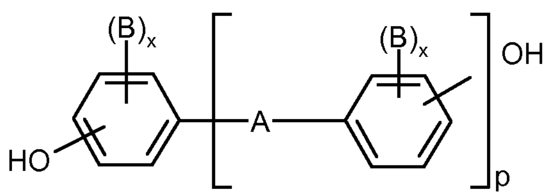

(I),

wobei

A eine Einfachbindung, $C_1$ bis $C_5$-Alkylen, $C_2$ bis $C_5$-Alkyliden, $C_5$ bis $C_6$-Cycloalkyliden,-O-, -SO-, -CO-, -S-, $-SO_2-$, $C_6$ bis $C_{12}$-Arylen, an das weitere aromatische gegebenenfalls Heteroatome enthaltende Ringe kondensiert sein können, oder ein Rest der Formel (II) oder (III)

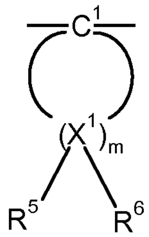

(II)

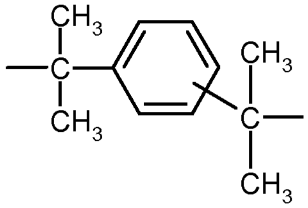

(III)

B jeweils $C_1$ bis $C_{12}$-Alkyl, vorzugsweise Methyl, Halogen, vorzugsweise Chlor und/oder Brom
x jeweils unabhängig voneinander 0, 1 oder 2,
p 1 oder 0 sind, und
$R^5$ und $R^6$ für jedes $X^1$ individuell wählbar, unabhängig voneinander Wasserstoff oder $C_1$ bis $C_6$ Alkyl, vorzugsweise Wasserstoff, Methyl oder Ethyl,
$X^1$ Kohlenstoff und
m eine ganze Zahl von 4 bis 7, bevorzugt 4 oder 5 bedeuten, mit der Maßgabe, dass an mindestens einem Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$ cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3,3,5-trimethylcyclohexan, 4,4'-Dihydroxydiphenylsulfid, 4,4'-Dihydroxydiphenylsulfon sowie deren di- und tetrabromierten oder -chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan. Insbesondere bevorzugt ist 2,2-Bis-(4-hydroxyphenyl)-propan (Bisphenol-A). Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, unverzweigten aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-[2-(2,4,4-Trimethylpentyl)]-phenol, 4-(1,3-Tetramethylbutyl)-phenol gemäß DE-A 2 842 005 oder Monoalkylphenol oder Dialkylphenole mit insgesamt 8 bis 20 Kohlenstoffatomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%mol-%, und 10 mol-%mol-%, bezogen auf die Molsumme der jeweils eingesetzten Diphenole.

Die thermoplastischen, unverzweigten aromatischen Polycarbonate haben mittlere Gewichtsmittelmolekulargewichte ($M_w$, gemessen z. B. durch GPC, Ultrazentrifuge oder Streulichtmessung) von 10.000 bis 200.000 g/mol, vorzugsweise 15.000 bis 80.000 g/mol, besonders bevorzugt 24.000 bis 32.000 g/mol.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.%, bezogen auf die Gesamtmenge an einzusetzenden Diphenolen, Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE-A 3 334 782 beschrieben.

Bevorzugte Polycarbonate sind neben den Bisphenol-A-Homopolycarbonaten die Copolycarbonate von Bisphenol-A mit bis zu 15 mol-%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von unverzweigten aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure. Besonders bevorzugt sind Gemische der Disäuredichloride der Isophthalsäure

und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$ bis $C_{22}$-Alkylgruppen oder durch Halogenatome substituiert sein können, sowie aliphatische $C_2$ bis $C_{22}$-Monocarbonsäurechloride in Betracht.

Die Menge an Kettenabbrechern beträgt jeweils 0,1 bis 10 mol-%, bezogen im Falle der phenolischen Kettenabbrecher auf Mol Diphenol und im Falle von Monocarbonsäurechlorid-Kettenabbrecher auf Mol Dicarbonsäuredichlorid.

Die unverzweigten aromatischen Polyestercarbonate können auch aromatische Hydroxycarbonsäuren eingebaut enthalten.

Die aromatischen Polyestercarbonate sind linear

In den thermoplastischen, unverzweigten aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, unverzweigten aromatischen Polycarbonate und Polyestercarbonate können allein oder im beliebigen Gemisch eingesetzt werden.

__Komponente B__

Die Komponente B umfasst bevorzugt ein oder mehrere Pfropfpolymerisate von

B.1 5 bis 95 Gew.-%, vorzugsweise 10 bis 90 Gew.-% eines oder mehrerer Vinylmonomeren auf

B.2 95 bis 5 Gew.-%, vorzugsweise 90 bis 10 Gew.-% eines oder mehrerer Silikonacrylat-Komposit-Kautschuke als Pfropfgrundlage, wobei der Silikonacrylat-Kautschuk

B.2.1 65 - 95 Gew.-% Silikonkautschuk- und

B.2.2 35 bis 5 Gew.-% Polyalkyl(meth)acrylatkautschuk enthält,

wobei sich die beiden genannten Kautschuk-Komponenten B.2.1 und B.2.2 im Komposit-Kautschuk gegenseitig durchdringen, so daß sie sich nicht wesentlich voneinander trennen lassen.

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Geeignete Monomere B.1 sind Vinylmonomere wie Vinylaromaten und/oder kernsubstituierte Vinylaromaten (wie Styrol, $\alpha$-Methylstyrol, p-Methylstyrol, p-Chlorstyrol), Methacrylsäure-($C_1$-$C_8$)-Alkylester (wie Methylmethacrylat, Ethylmethacrylat, 2-Ethylhexylmethacrylat, Allylmethacrylat), Acrylsäure-($C_1$-$C_8$)-Alkylester (wie Methylacrylat, Ethylacrylat, n-Butylacrylat, t-Butylacrylat), organische Säuren (wie Acrylsäure, Methacrylsäure), und/oder Vinylcyanide (wie Acrylnitril und Methacrylnitril), und/oder Derivate (wie Anhydride und Imide) ungesättigter Carbonsäuren (beispielsweise Maleinsäureanhydrid und N-Phenyl-Maleinimid). Diese Vinylmonomere können alleine oder in Mischungen von mindestens zwei Monomeren verwendet werden.

Bevorzugte Monomere B.1 sind ausgewählt aus mindestens einem der Monomere Styrol, $\alpha$-Methylstyrol, Methylmethacrylat, n-Butylacrylat und Acrylnitril. Besonders bevorzugt wird als Monomer B.1 Methylmethacrylat eingesetzt.

Die Glasübergangstemperatur der Pfropfgrundlage B.2 beträgt < 10°C, vorzugsweise < 0°C, besonders bevorzugt < -20°C. Die Pfropfgrundlage B.2 hat im allgemeinen eine mittlere Teilchengröße ($d_{50}$-Wert) von 0,05 bis 10 $\mu$m, vorzugsweise 0,06 bis 5 $\mu$m, besonders bevorzugt 0,08 bis 1 $\mu$m.

Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Als Pfropfgrundlagen B.2 sind erfindungsgemäß hochsilikonhaltige Silikonacrylat-Kautschuke geeignet. Diese Silikonacrylat-Kautschuke sind Komposit-Kautschuke mit pfropfaktiven Stellen enthaltend 65 - 95 Gew.-% Silikonkautschuk-Anteil und 35 bis 5 Gew.-% Polyalkyl(meth)acrylatkautschuk-Anteil, wobei sich die beiden genannten Kautschuk-Komponenten im Komposit-Kautschuk gegenseitig durchdringen, so daß sie sich nicht wesentlich voneinander trennen

lassen. Silikonacrylat-Kautschuke sind bekannt und beispielsweise beschrieben in US 5,807,914, EP 430134 und US 4888388.

Geeignete Silikonkautschuk-Komponenten der Silikonacrylat-Kautschuke sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk wird bevorzugt durch Emulsionspolymerisation hergestellt, bei der Siloxan-Monomerbausteine, Vernetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan eingesetzt. Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vernetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40 Gew.%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quelleungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

$$CH_2{=}C(R^2)\text{-}COO\text{-}(CH_2)_p\text{-}SiR^1{}_nO_{(3-n)/2} \quad \text{(V-1)}$$

$$CH_2{=}CH\text{-}SiR^1{}_nO_{(3-n)/2} \quad \text{(V-2)}$$

oder

$$HS\text{-}(CH_2)_p\text{-}SiR^1{}_nO_{(3-n)/2} \quad \text{(V-3),}$$

wobei

$R^1$ für $C_1$-$C_4$-Alkyl, vorzugsweise Methyl, Ethyl oder Propyl, oder Phenyl,
$R^2$ für Wasserstoff oder Methyl stehen,
n 0, 1 oder 2 und
p eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt.

Beispielhaft und bevorzugt seien genannt: β-Methacryloyloxy-ethyldimethoxymethyl-silan, γ-Methacryloyloxy-propylmethoxydimethyl-silan, γ-Methacryloyloxy-propyldimethoxymethyl-silan, γ-Methacryloyloxy-propyltrimethoxy-silan, γ-Methacryloyloxy-propylethoxydiethyl-silan, γ-Methacryloyloxy-propyldiethoxymethyl-silan, δ-Methacryloyl-oxy-butyldiethoxymethyl-silan oder Mischungen hieraus.

Bevorzugt werden 0 bis 20 Gew.-% Pfropfmittel bezogen auf das Gesamtgewicht des Silikonkautschuks eingesetzt.

Geeignete Polyalkyl(meth)acrylatkautschuk-Komponenten der Silikonacrylat-Kautschuke können hergestellt

werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die $C_1$ bis $C_8$-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-$C_1$-$C_8$-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Der Silikonacrylat-Kautschuk wird hergestellt, indem zunächst der Silikonkautschuk als wäßriger Latex hergestellt wird. Dabei kann der Silikonkautschuk durch Emulsionspolymerisation hergestellt werden, wie beispielsweise in US 2891920 und US 3294725 beschrieben. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wäßrigen alkalischen Lösung neutralisiert wird, z.B. durch Zugabe einer wäßrigen Natriumhydroxid, Kaliumhydroxid oder Natriumcarbonat-Lösung.

Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen läßt.

Zur Herstellung der Silikonacrylat-Pfropfkautschuke B werden die Monomere B.1 auf die Kautschuk-Grundlage B.2. aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere B.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) bzw. (VII) ab. Nach der Polymerisation zum Silikonacrylat-Pfropfkautschuk wird der wäßrige Latex in heißes Wasser gegeben, in dem zuvor Metallsalze gelöst wurden, wie z.B. Calciumchlorid oder Magnesiumsulfat. Dabei koaguliert der Silikonacrylat-Pfropfkautschuk und kann anschließend separiert werden.

## Komponente C

Unter Talk wird ein natürlich vorkommender oder synthetisch hergestellter Talk verstanden, dadurch gekennzeichnet, dass der Talk den oben genannten erfindungsgemäßen top cut ($d_{98}$-Wert) aufweist. Zusammensetzungen enthaltend Talk mit einem zu hohen $d_{98}$-Wert haben den Nachteil, dass diese empfindlicher gegen Hydrolyse sind und im Vergleich, d.h. bei gleicher Einsatzmenge, schlechtere mechanische Eigenschaften zeigen (niedrigeren E-Modul und geringere Kerbschlagzähigkeit). Der $d_{98}$-Wert beschreibt die Partikelgröße, unterhalb derer 98 Gew.-% der Partikel

liegen. Der $d_{98}$-Wert wurde durch die Messung der Partikelgrößenverteilung mit einem Sedigraph 5100 (Micromeritics GmbH, Erftstrasse 43, 41238 Mönchengladbach, Deutschland) bestimmt.

Reiner Talk hat die chemische Zusammensetzung 3 MgO 4 $SiO_2 \cdot H_2O$ und somit einen MgO-Gehalt von 31,9 Gew.-%, einen $SiO_2$-Gehalt von 63,4 Gew.-% und einen Gehalt an chemisch gebundenem Wasser von 4,8 Gew.-%. Talk ist ein Silikat mit Schichtstruktur.

Natürlich vorkommende Talkmaterialien besitzen im allgemeinen nicht die oben aufgeführte Zusammensetzung für reinen Talk, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

Bevorzugt eingesetzt werden spezielle Talksorten. Die speziellen Talksorten der bevorzugten Ausführungsform der Erfindung zeichnen sich aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen $SiO_2$-Gehalt von 55 bis 65 Gew.-%, bevorzugt 58 bis 64 Gew.-%, besonders bevorzugt 60 bis 62,5 Gew.-%. Bevorzugte Talktypen zeichnen sich des Weiteren durch einen $Al_2O_3$-Gehalt von kleiner als 5 Gew.-%, besonders bevorzugt kleiner als 1 Gew.-%, insbesondere kleiner als 0,7 Gew.-%, aus. Eine kommerziell verfügbare Talktype, die dieser Definition entspricht, ist z.B. Luzenac® A3 der Firma Luzenac Naintsch Mineralwerke GmbH bzw. Rio Tinto Minerals (Graz, Österreich).Talktypen, welche diese Anforderung an die Reinheit der bevorzugten Ausführungsform der Erfindung nicht erfüllen, sind z.B. Luzenac® SE-Standard, Luzenac® SE-Super, Luzenac® SE-Micro sowie Luzenac® ST 10, 15, 20, 30 und 60, die allesamt von der Firma Luzenac Naintsch Mineralwerke GmbH bzw. Rio Tinto Minerals vertrieben werden.

Vorteilhaft ist insbesondere der Einsatz des Talkes gemäß Komponente C in Form von Typen mit einer mittleren Teilchengröße $d_{50}$ von 0,1 bis 4 μm, bevorzugt 0,15 bis 3 μm, besonders bevorzugt 0,2 bis 2 μm Die mittlere Teilchengröße $d_{50}$ ist der Durchmesser, oberhalb und unterhalb dessen jeweils 50 Gew.-% der Teilchen liegen. Es können auch Mischungen von Talk-Typen eingesetzt werden, die sich in ihrer mittleren Teilchengröße $d_{50}$ unterscheiden. Der $d_{50}$ -Wertes des Talkes wurde durch die Messung der Partikelgrößenverteilung mit einem Sedigraph 5100 (Micromeritics GmbH, Erftstrasse 43, 41238 Mönchengladbach, Deutschland) bestimmt.

Der Talk kann oberflächenbehandelt, z.B. silanisiert sein, um eine bessere Verträglichkeit mit dem Polymer zu gewährleisten. Im Hinblick auf die Verarbeitung und Herstellung der Formmassen ist auch der Einsatz kompaktierter Talks vorteilhaft.

**Komponente D**

Als Flammschutzmittel gemäß Komponente D werden phosphorhaltige Verbindungen eingesetzt. Diese sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (VIII)

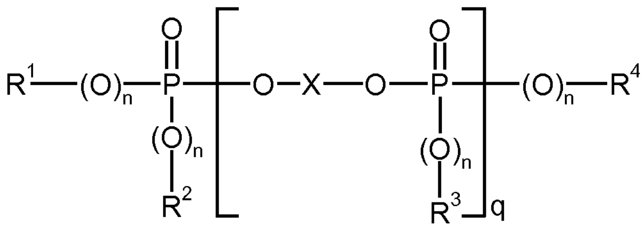

(VIII)

worin

| | |
|---|---|
| $R^1$, $R^2$, $R^3$ und $R^4$, | unabhängig voneinander jeweils gegebenenfalls halogeniertes $C_1$ bis $C_8$-Alkyl, jeweils gegebenenfalls durch Alkyl, vorzugsweise $C_1$ bis $C_4$-Alkyl, und/oder Halogen, vorzugsweise Chlor, Brom, substituiertes $C_5$ bis $C_6$-Cycloalkyl, $C_6$ bis $C_{20}$-Aryl oder $C_7$ bis $C_{12}$-Aralkyl, |
| n | unabhängig voneinander, 0 oder 1, |
| q | 0 bis 30 und |
| X | einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 |

Etherbindungen enthalten kann, bedeuten.

Bevorzugt stehen $R^1$, $R^2$, $R^3$ und $R^4$ unabhängig voneinander für $C_1$ bis $C_4$-Alkyl, Phenyl, Naphthyl oder Phenyl-$C_1$-$C_4$-alkyl. Die aromatischen Gruppen $R^1$, $R^2$, $R^3$ und $R^4$ können ihrerseits mit Halogen- und/oder Alkylgruppen, vorzugsweise Chlor, Brom und/oder $C_1$ bis $C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (VIII) bedeutet bevorzugt einen ein- oder mehrkernigen aromatischen Rest mit 6 bis 30 C-Atomen. Dieser leitet sich bevorzugt von Diphenolen der Formel (I) ab.

n in der Formel (VIII) kann, unabhängig voneinander, 0 oder 1 sein, vorzugsweise ist n gleich 1.

q steht für Werte von 0 bis 30, bevorzugt 0,3 bis 20, besonders bevorzugt 0,5 bis 10, insbesondere 0,5 bis 6, ganz besonders bevorzugt 1,05 bis 1,6, höchst bevorzugt 1,05 bis 1,2.

X steht besonders bevorzugt für

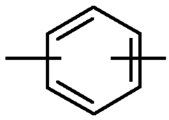 , 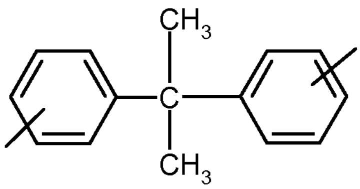 , 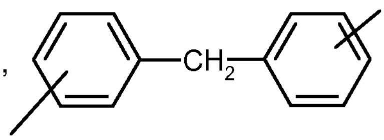 ,

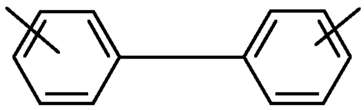 , 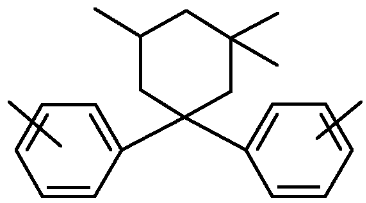

oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente D können auch Mischungen verschiedener Phosphate eingesetzt werden.

Phosphorverbindungen der Formel (VIII) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Oligophosphat und Bisphenol A verbrücktes Oligophosphat. Der Einsatz von oligomeren Phosphorsäureestern der Formel (VIII), die sich vom Bisphenol A ableiten, ist insbesondere bevorzugt.

Höchst bevorzugt als Komponente D ist Bisphenol-A basierendes Oligophosphat gemäß Formel (VIIIa),

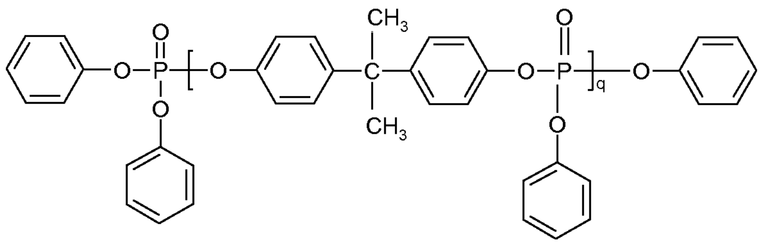

(VIIIa)

wobei q in Formel (VIIIa) für Werte von 1,05 bis 1,2 steht.

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Wenn Mischungen verschiedener Phosphorverbindungen eingesetzt werden und im Fall von oligomeren Phosphorverbindungen, handelt es sich bei dem angegebenen q-Wert um den mittleren q-Wert. Der mittlere q-Wert kann bestimmt werden, indem mittels geeigneter Methode (Gaschromatographie (GC), High Pressure Liquid Chromatography (HPLC), Gelpermeationschromatographie (GPC)) die Zusammensetzung der Phosphorverbindung (Molekulargewichtsverteilung) bestimmt wird und daraus die Mittelwerte für q berechnet werden.

Weiterhin können Phosphonatamine und Phosphazene, wie sie in WO-A 00/00541 und WO-A 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

**Komponente E**

Die Komponente E umfasst ein oder mehrere thermoplastische Vinyl(Co)Polymerisate E.1, Polyalkylenterephthalate E.2. und/oder von Komponente B verschiedene Pfropfpolymerisate E.3. Geeignet sind als Vinyl(Co)Polymerisate E.1 Polymerisate von mindestens einem Monomeren aus der Gruppe der Vinylaromaten, Vinylcyanide (ungesättigte Nitrile), (Meth)Acrylsäure-($C_1$-$C_8$)-Alkylester, ungesättigte Carbonsäuren sowie Derivate (wie Anhydride und Imide) ungesättigter Carbonsäuren. Insbesondere geeignet sind (Co)Polymerisate aus

E.1.1 50 bis 99, vorzugsweise 60 bis 80 Gew.-Teilen Vinylaromaten und/oder kernsubstituierten Vinylaromaten wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

E.1.2 1 bis 50, vorzugsweise 20 bis 40 Gew.-Teilen Vinylcyanide (ungesättigte Nitrile) wie Acryl-nitril und Methacrylnitril und/oder (Meth)Acryl-säure-($C_1$-$C_8$)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate E.1 sind harzartig, thermoplastisch und kautschukfrei. Besonders bevorzugt ist das Copolymerisat aus E.1.1 Styrol und E.1.2 Acrylnitril.

Die (Co)Polymerisate gemäß E.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente E.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 Gew-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol-%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Propandiol-1,3- bzw. Butandiol-1,4-resten bis zu 20 Mol.-% anderer aliphatischer Diole mit 3 bis 12 C-Atomen oder cycloaliphatischer Diole mit 6 bis 21 C-Atomen enthalten, z.B. Reste von 1,3-Propandiol, 2-Ethylpropan-1,3-diol, Neopentylglykol, 1,5-Pentan-diol, 1,6-Hexandiol, Cyclohexan-1,4-dimethanol, 3-Methylpentan-2,4-diol, 2-Methylpentan-2,4-diol, 2,2,4-Trimethylpentan-1,3-diol und 2-Ethylhexan-1,6-diol, 2,2-Diethylpropan-1,3-diol, 2,5-Hexandiol, 1,4-Di-($\beta$-hydroxyethoxy)-benzol, 2,2-Bis-(4-hydroxycyclohexyl)-propan, 2,4-Dihydroxy-1,1,3,3-tetramethyl-cyclobutan, 2,2-bis-(3-ß-hydroxyethoxyphenyl)-propan und 2,2-bis-(4-hydroxypropoxyphenyl)-propan (DE-A 24 07 674, 24 07 776, 27 15 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.-%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

Die von Komponente B verschiedenen Pfropfpolymerisate E.3 umfassen insbesondere ein oder mehrere Pfropfpolymerisate von

E.3.1 5 bis 95 Gew.-%, wenigstens eines Vinylmonomeren auf

E.3.2 95 bis 5 Gew.-% wenigstens einer Pfropfgrundlage ausgewählt aus der Gruppe bestehend aus Dienkautschuke, EP(D)M-Kautschuke (d.h. solche auf Basis Ethylen/Propylen und gegebenenfalls Dien), Acrylat-, Polyurethan-, Chloropren und Ethylen/Vinylcetat-Kautschuke.

Monomere E.3.1 sind vorzugsweise Gemische aus

E.3.1.1 50 bis 99 Gew.-Teilen (bezogen auf die Summe von E.3.1.1 und E.3.1.2 gleich 100 Gew.-Teile) Vinylaromaten und/oder kernsubstituierten Vinylaromaten (wie Styrol, $\alpha$-Methylstyrol, p-Methylstyrol, p-Chlorstyrol) und/oder (Meth)Acrylsäure-($C_1$-$C_8$)-Alkylester, wie Methylmethacrylat, Ethylmethacrylat), und

E.3.1.2 1 bis 50 Gew.-Teilen (bezogen auf die Summe von E.3.1.1 und E.3.1.2 gleich 100 Gew.-Teile) Vinylcyanide (ungesättigte Nitrile wie Acrylnitril und Methacrylnitril) und/oder (Meth)Acrylsäure-($C_1$-$C_8$)-Alkylester, wie Methylmethacrylat, n-Butylacrylat, t-Butylacrylat, und/oder Derivate (wie Anhydride und Imide) ungesättigter Carbonsäuren, beispielsweise Maleinsäureanhydrid und N-Phenyl-Maleinimid.

Bevorzugt sind die erfindungsgemäßen Zusammensetzungen frei an von Komponente B verschiedener Pfropfpolymerisate E.3.

**Komponente F**

Die Zusammensetzung kann weitere handelsübliche Zusatzstoffe gemäß Komponente F wie Flammschutzsynergisten, Antidrippingmittel (beispielsweise Verbindungen der Substanzklassen der fluorierten Polyolefine, der Silikone sowie Aramidfasern), Gleit- und Entformungsmittel (beispielsweise Pentaerythrittetrastearat), Nukleiermittel, Stabilisatoren, Antistatika (beispielsweise Leitruße, Carbonfasern, Carbon Nanotubes sowie organische Antistatika wie Polyalkylenether, Alkyl-Sulfonate oder Polyamid-haltige Polymere), Säuren, von Talk verschiedene Füll- und Verstärkungsstoffe (beispielsweise Glas- oder Karbonfasern, Glimmer, Kaolin, $CaCO_3$ und Glasschuppen) sowie Farbstoffe und Pigmente enthalten.

**Herstellung der Formmassen und Formkörper**

Die erfindungsgemäßen thermoplastischen Formmassen werden hergestellt, indem man die jeweiligen Bestandteile in bekannter Weise vermischt und bei Temperaturen von 240°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung sind ebenfalls Verfahren zur Herstellung der Formmassen und die Verwendung der Formmassen zur Herstellung von Formkörpern sowie die Formteile selbst.

Die erfindungsgemäßen Formmassen können zur Herstellung von Formkörpern jeder Art verwendet werden. Diese können durch Spritzguss, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Fernsehgeräte, Saftpressen, Kaffeemaschinen, Mixer; für Büromaschinen wie Monitore, Flatscreens, Notebooks, Drucker, Kopierer; Platten, Rohre, Elektroinstallationskanäle, Fenster, Türen und weitere Profile für den Bausektor (Innenausbau und Außenanwendungen) sowie Elektro- und Elektronikteile wie Schalter, Stecker und Steckdosen sowie Karosserie- bzw. Innenbauteile für Nutzfahrzeuge, insbesondere für den Automobilbereich.

Insbesondere können die erfindungsgemäßen Formmassen beispielsweise auch zur Herstellung von folgenden Formkörpern oder Formteilen verwendet werden: Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -Übermittlung, Gehäuse und Verkleidung von medizinischen Geräten, Massagegeräte und Gehäuse dafür, Spielfahrzeuge für Kinder, flächige Wandelemente, Gehäuse für Sicherheitseinrichtungen und für Fernsehgeräte, wärmeisolierte Transportbehältnisse, Formteile für Sanitär- und Badausrüstungen, Abdeckgitter für Lüfteröffnungen und Gehäuse für Gartengeräte.

Die folgenden Beispiele dienen der weiteren Erläuterung der Erfindung.

**Beispiele**

Komponente A-1

Unverzweigtes Polycarbonat auf Basis Bisphenol A mit einer relativen Lösungsviskosität von $\eta_{rel}$ = 1,28, gemessen in $CH_2Cl_2$ als Lösungsmittel bei 25°C und einer Konzentration von 0,5 g/100 ml.

Komponente A-2

Unverzweigtes Polycarbonat auf Basis Bisphenol A mit einer relativen Lösungsmittelviskosität von $\eta_{rel}$ = 1,20 gemessen in $CH_2Cl_2$ als Lösungsmittel bei 25°C und einer Konzentration von 0,5 g/100 ml.

Komponente B-1

Schlagzähmodifikator, Pfropfpolymerisat von

B-1.1 11 Gew.-% Methylmethacrylat auf

B-1.2 89 Gew.-% eines Silikonacrylat-Komposit-Kautschukes als Pfropfgrundlage, wobei der Silikonacrylat-Kautschuk

B-1.2.1 92 Gew.-% Silikonkautschuk- und

B-1.2.2 8 Gew.-% Polyalkyl(meth)acrylatkautschuk-enthält, und

wobei sich die beiden genannten Kautschuk-Komponenten B.2.1 und B.2.2 im Komposit-Kautschuk gegenseitig durchdringen, so daß sie sich nicht wesentlich voneinander trennen lassen.

Komponente B-2

Schlagzähmodifikator, Pfropfpolymerisat von

B-2.1 17 Gew.-% Methylmethacrylat auf

B-2.2 83 Gew.-% eines Silikonacrylat-Komposit-Kautschukes als Pfropfgrundlage, wobei der Silikonacrylat-Kautschuk

B-2.2.1 11 Gew.-% Silikonkautschuk- und

B-2.2.2 89 Gew.-% Polyalkyl(meth)acrylatkautschuk-enthält, und

wobei sich die beiden genannten Kautschuk-Komponenten B.2.1 und B.2.2 im Komposit-Kautschuk gegenseitig durchdringen, so daß sie sich nicht wesentlich voneinander trennen lassen.

Komponente C

C-1 Talk mit einen $d_{98}$-Wert von 5 $\mu$m und einer mittleren Teilchengröße ($d_{50}$) von 1 $\mu$m (Jetfine® 3CA, Luzenac Naintsch bzw. Rio Tinto Minerals, Graz, Österreich)

C-2 Talk mit einen $d_{98}$-Wert von 22 $\mu$m und einer mittleren Teilchengröße ($d_{50}$) von 4,5 $\mu$m (Finntalc® M15-AW, Mondo Minerals, Amsterdam, Niederlande)

C-3 Talk mit einen $d_{98}$-Wert von 25 $\mu$m und einer mittleren Teilchengröße ($d_{50}$) von 6 $\mu$m (Finntalc® M20SL-AW, Mondo Minerals, Amsterdam, Niederlande)

C-4 Talk mit einen $d_{98}$-Wert von 35 $\mu$m und einer mittleren Teilchengröße ($d_{50}$) von 9 $\mu$m (Finntalc® M30, Mondo Minerals, Amsterdam, Niederlande)

Komponente D

Bisphenol-A-basierendes Oligophosphat

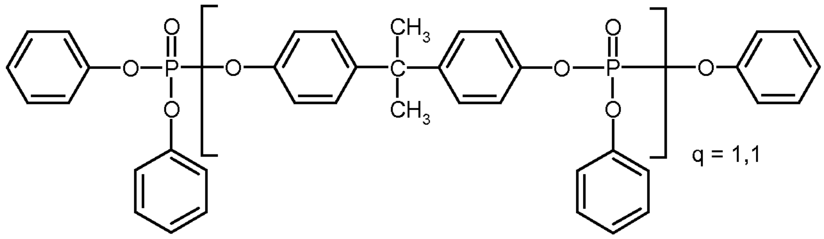

Komponente E-1

Copolymerisat aus 77 Gew.-% Styrol und 23 Gew.-% Acrylnitril mit einem gewichtsgemittelten Molekulargewicht $M_w$ von 130 kg/mol (bestimmt durch GPC), hergestellt nach dem Masseverfahren.

Komponente E-2

ABS-Polymerisat hergestellt durch Masse-Polymerisation von 82 Gew.-% bezogen auf das ABS-Polymerisat einer Mischung aus 24 Gew.-% Acrylnitril und 76 Gew.-% Styrol in Gegenwart von 18 Gew.-% bezogen auf das ABS-Polymerisat eines Polybutadien-Styrol-Blockcopolymerkautschuks mit einem Styrolgehalt von 26 Gew.-%. Das gewichtsgemittelte Molekulargewicht $M_w$ des freien SAN-Copolymeranteils im ABS-Polymerisat beträgt 80000 g/mol (gemessen per GPC in THF). Der Gelgehalt des ABS-Polymerisats beträgt 24 Gew.-% (gemessen in Aceton).

Komponente F

| | |
|---|---|
| Komponente F-1: | CFP 6000 N, Polytetrafluorethylen-Pulver (Hersteller: Du Pont, Genf, Schweiz) |
| Komponente F-2: | Pentaerythrittetrastearat |
| Komponente F-3: | Irganox® B900 (Hersteller: Ciba Specialty Chemicals Inc., Basel, Schweiz) |
| Komponente F-4: | Pural® 200, AlO(OH) mit Boehmit-Struktur (Hersteller: Sasol, Hamburg, Deutschland) |

**Herstellung und Prüfung der Formmassen**

Auf einem Zweischneckenextruder (ZSK-25) (Fa. Werner und Pfleiderer) werden die in den Tabellen 1-5 aufgeführten Einsatzstoffe bei einer Drehzahl von 225 Upm und einem Durchsatz von 20 kg/h bei einer Maschinentemperatur von 260°C compoundiert und granuliert.

Die fertigen Granulate werden auf einer Spritzgussmaschine zu den entsprechenden Probekörpern verarbeitet (Massetemperatur 260°C, Werkzeugtemperatur 80°C, Fließfrontgeschwindigkeit 240 mm/s). Die Charakterisierung erfolgt gemäß DIN EN ISO 180/1A (Izod-Kerbschlagzähigkeit, $a_K$), DIN EN ISO 527 (Zug-E-Modul), DIN ISO 306 (Vicat-Erweichungstemperatur, Verfahren B mit 50 N Belastung und einer Heizrate von 120 K/h), UL 94 V (an Stäben der Abmessung 127 x 12,7 x 1,0 mm gemessen), ISO 11443 (Schmelzeviskosität) und DIN EN ISO 1133 (Schmelze-Volumen-Fließrate, melt volume-flow rate MVR).

Als Maß für die Chemikalienbeständigkeit der hergestellten Zusammensetzungen dient der Environmental Stress Cracking (ESC)-Test (ISO 4599), der wie folgt durchgeführt wird:

a) Mit Toluol:Isopropanol im Vol.-Verhältnis 60:40 als Testmedium (ISO 4599), Exposition für 5 min bei variabler Randfaserdehnung, d.h. es wird die Randfaserdehnung ermittelt und angegeben, bei der Bruch des Probekörpers auftritt.
b) Mit Toluol:Isopropanol im Vol.-Verhältnis 60:40 als Testmedium (ISO 4599), Exposition bei 2,4% Randfaserdehnung, d.h. es wird die Zeitdauer ermittelt und angegeben, bei der Bruch des Probekörpers auftritt.
c) Wie b), jedoch Rapsöl als Testmedium.
d) Wie b), jedoch Motoröl als Testmedium.

Als Maß für die Hydrolysebeständigkeit der hergestellten Zusammensetzungen dient die Änderung des MVR gemessen nach ISO 1133 bei 240°C mit einer Stempellast von 5 kg bei einer 7-tägigen Lagerung des Granulats bei 95°C und 100% relativer Luftfeuchte ("FWL-Lagerung"). Dabei wird der Anstieg des MVR-Wertes gegenüber dem MVR-Wert vor der entsprechenden Lagerung als ΔMVR(hydr.),welcher sich durch nachstehende Formel definiert, berechnet.

$$\Delta MVR(hydr.) = \frac{MVR(nach\,FWL - Lagerung) - MVR(vor\,Lagerung)}{MVR(vor\,Lagerung)} \bullet 100\%$$

Tabelle 1: Zusammensetzungen und ihre Eigenschaften

| **Komponenten (Gew.-Teile)** | | **1** | **2 (Vgl.)** | **3 (Vgl.)** | **4 (Vgl.)** |
|---|---|---|---|---|---|
| A-1 | | 69,7 | 69,7 | 69,7 | 69,7 |
| B-1 | | 7,6 | 7,6 | 7,6 | 7,6 |
| C-1 | | 10,1 | | | |
| C-2 | | | 10,1 | | |
| C-3 | | | | 10,1 | |
| C-4 | | | | | 10,1 |
| D | | 12,6 | 12,6 | 12,6 | 12,6 |
| F-1 | | 0,4 | 0,4 | 0,4 | 0,4 |
| F-2 | | 0,4 | 0,4 | 0,4 | 0,4 |
| F-3 | | 0,1 | 0,1 | 0,1 | 0,1 |
| **Eigenschaften** | | | | | |
| $a_K$ | kJ/m$^2$ | 26 | 10 | 10 | 9 |
| E-Modul | N/mm$^2$ | 4068 | 3562 | 3590 | 3556 |
| Vicat B 120 | °C | 100 | 100 | 100 | 100 |
| UL 94 V bei 1.0 mm Dicke | | V-0 | V-0 | V-0 | V-0 |
| Schmelzeviskosität 260°C [ 1000 s-1] | Pas | 240 | 201 | 208 | 208 |
| Schmelzeviskosität 260°C [ 1500 s-1] | Pas | 196 | 168 | 173 | 172 |
| MVR 240°C/5 kg | cm$^3$/10min. | 11 | 19 | 19 | 16 |
| ΔMVR (hydr.) | % | 33 | 53 | 48 | 80 |
| ESC-Test (Toluol:Isopropanol) Randfaserdehnung, bei der Bruch auftritt | % | > 2,4 | > 2,4 | > 2,4 | > 2,4 |
| ESC-Test (Toluol:Isopropanol) Zeit bis zum Bruch | min | > 30 | > 30 | > 30 | > 30 |

Aus Tabelle 1 ist ersichtlich, dass die Zusammensetzung mit der erfindungsgemäßen Talktype C-1 eine höhere Hydrolysestabilität, einen höheren E-Modul (über 3600 MPa) und eine höhere Kerbschlagzähigkeit (über 10 kJ/m$^2$) aufweist gegenüber den Zusammensetzungen der Vergleichsbeispiele enthaltend die Talktypen C-2 bis C-4.

Aus den Tabellen 2 bis 5 ist ersichtlich, dass die Zusammensetzungen mit der Kombination aus erfindungsgemäßem Pfropfpolymer und erfindungsgemäßer Talktype C-1 ein besseres ESC-Verhalten und eine höhere Hydrolysebeständigkeit aufweisen, bei zusätzlich verringerter Schmelzeviskosität und gleichbleibender Flammwidrigkeit im UL 94-V-Test.

Tabelle 2: Zusammensetzungen und ihre Eigenschaften

| **Komponenten (Gew..-Teile)** | | **5** | **6 (Vgl.)** | **7** | **8 (Vgl.)** |
|---|---|---|---|---|---|
| A-1 | | 81,4 | 81,4 | 69,7 | 69,7 |

(fortgesetzt)

| Komponenten (Gew..-Teile) | | 5 | 6 (Vgl.) | 7 | 8 (Vgl.) |
|---|---|---|---|---|---|
| B-1 | | 5,0 | | 7,6 | |
| B-2 | | | 5,0 | | 7,6 |
| C-1 | | 5,0 | 5,0 | 10,1 | 10,1 |
| D | | 8,6 | 8,6 | 12,6 | 12,6 |
| F-1 | | 0,4 | 0,4 | 0,4 | 0,4 |
| F-2 | | 0,4 | 0,4 | 0,4 | 0,4 |
| F-3 | | 0,1 | 0,1 | 0,1 | 0,1 |
| **Eigenschaften** | | | | | |
| $a_K$ | $kJ/m^2$ | 45 | 42 | 26 | 27 |
| E-Modul | $N/mm^2$ | 3124 | 3151 | 4068 | 4329 |
| Vicat B 120 | °C | 115 | 116 | 100 | 101 |
| UL 94 V bei 1.0 mm Dicke | | V-0 | V-0 | V-0 | V-0 |
| Schmelzeviskosität 260°C [ 1000 s-1] | Pas | 361 | 385 | 240 | 253 |
| Schmelzeviskosität 260°C [ 1500 s-1] | Pas | 288 | 305 | 196 | 208 |
| MVR 240°C/5 kg | $cm^3$/10min. | 9 | 9 | 11 | 12 |
| ΔMVR (hydr.) | % | 33 | 38 | 33 | 65 |
| ESC-Test (Toluol:Isopropanol) Randfaserdehnung, bei der Bruch auftritt | % | > 2,4 | 2,4 | > 2,4 | > 2,4 |
| ESC-Test (Toluol:Isopropanol) Zeit bis zum Bruch | min | 22 | 10 | > 30 | > 30 |

Tabelle 3: Zusammensetzungen und ihre Eigenschaften

| Komponenten (Gew.-Teile) | | 9 | 10 (Vgl.) | 11 | 12 (Vgl.) |
|---|---|---|---|---|---|
| A-1 | | 80,8 | 80,8 | 68,1 | 68,1 |
| B-1 | | 5,2 | | 8,0 | |
| B-2 | | | 5,2 | | 8,0 |
| C-1 | | 5,2 | 5,2 | 10,6 | 10,6 |
| D | | 8,8 | 8,8 | 13,3 | 13,3 |
| E-1 | | 2,6 | 2,6 | 5,3 | 5,3 |
| F-1 | | 0,4 | 0,4 | 0,4 | 0,4 |
| F-2 | | 0,4 | 0,4 | 0,4 | 0,4 |
| F-3 | | 0,1 | 0,1 | 0,1 | 0,1 |
| **Eigenschaften** | | | | | |
| $a_K$ | $kJ/m^2$ | 36 | 36 | 19 | 17 |
| E-Modul | $N/mm^2$ | 3144 | 3195 | 3897 | 3951 |
| Vicat B 120 | °C | 114 | 115 | 101 | 98 |
| UL 94 V bei 1.0 mm Dicke | | V-0 | V-0 | V-0 | V-0 |
| Schmelzeviskosität 260°C [ 1000 s-1] | Pas | 306 | 357 | 202 | 211 |
| Schmelzeviskosität 260°C [ 1500 s-1] | Pas | 241 | 284 | 163 | 171 |

(fortgesetzt)

| Eigenschaften | | | | | |
|---|---|---|---|---|---|
| MVR 240°C/5 kg | $cm^3$/10min. | 10 | 9 | 13 | 14 |
| ΔMVR (hydr.) | % | 27 | 36 | 29 | 53 |
| ESC-Test (Toluol:Isopropanol) Randfaserdehnung, bei der Bruch auftritt | % | > 2,4 | > 2,4 | > 2,4 | > 2,4 |
| ESC-Test (Toluol:Isopropanol) Zeit bis zum Bruch | min | 27 | 12 | > 30 | > 30 |

Tabelle 4: Zusammensetzungen und ihre Eigenschaften

| Komponenten (Gew.-Teile) | | 13 | 14 (Vgl.) | 15 | 16 (Vgl.) |
|---|---|---|---|---|---|
| A-1 | | 66,9 | 66,9 | 56,5 | 56,5 |
| A-2 | | 10,5 | 10,5 | 20,9 | 20,9 |
| B-1 | | 2,3 | | 2,3 | |
| B-2 | | | 2,3 | | 2,3 |
| C-1 | | 6,3 | 6,3 | 6,3 | 6,3 |
| D | | 14,0 | 14,0 | 14,0 | 14,0 |
| E-2 | | 3,5 | 3,5 | 3,5 | 3,5 |
| F-1 | | 0,2 | 0,2 | 0,2 | 0,2 |
| F-2 | | 0,4 | 0,4 | 0,4 | 0,4 |
| F-3 | | 0,1 | 0,1 | 0,1 | 0,1 |
| F-4 | | 0,5 | 0,5 | 0,5 | 0,5 |
| **Eigenschaften** | | | | | |
| $a_K$ | kJ/$m^2$ | 7 | 7 | 6 | 7 |
| E-Modul | N/$mm^2$ | 3464 | 3409 | 3466 | 3350 |
| Vicat B 120 | °C | 100 | 101 | 100 | 101 |
| UL 94 V bei 1.0 mm Dicke | | V-0 | V-0 | V-0 | V-0 |
| Schmelzeviskosität 260°C [1000 s-1] | Pas | 173 | 179 | 154 | 164 |
| Schmelzeviskosität 260°C [1500 s-1] | Pas | 146 | 151 | 132 | 140 |
| MVR 240°C/5 kg | $cm^3$/10min. | 31 | 29 | 37 | 34 |
| ΔMVR (hydr.) | % | 20 | 31 | 14 | 33 |
| ESC-Test (Toluol:Isopropanol) Randfaserdehnung, bei der Bruch auftritt | % | 2,4 | 1,8 | 2,4 | 1,8 |
| ESC-Test (Rapsöl) Zeit bis zum Bruch | min | 13 | 6 | 5 | 4 |
| ESC-Test (Motoröl) Zeit bis zum Bruch | h | 144 | 101 | 30 | 24 |

Tabelle 5: Zusammensetzungen und ihre Eigenschaften

| Komponenten (Gew.-Teile) | | 17 | 18 (Vgl.) | 19 | 20 (Vgl.) |
|---|---|---|---|---|---|
| A-1 | | 72,7 | 72,7 | 74,2 | 74,2 |
| B-1 | | 6,4 | | 4,4 | |
| B-2 | | | 6,4 | | 4,4 |

(fortgesetzt)

| Komponenten (Gew.-Teile) | | 17 | 18 (Vgl.) | 19 | 20 (Vgl.) |
|---|---|---|---|---|---|
| C-1 | | 7,5 | 7,5 | 7,7 | 7,7 |
| D | | 13,4 | 13,4 | 13,7 | 13,7 |
| E-2 | | 6,4 | 6,4 | 8,8 | 8,8 |
| F-1 | | 0,4 | 0,4 | 0,4 | 0,4 |
| F-2 | | 0,4 | 0,4 | 0,4 | 0,4 |
| F-3 | | 0,1 | 0,1 | 0,1 | 0,1 |
| **Eigenschaften** | | | | | |
| $a_K$ | $kJ/m^2$ | 31 | 32 | 16 | 14 |
| E-Modul | $N/mm^2$ | 3363 | 3451 | 3588 | 3571 |
| Vicat B 120 | °C | 100 | 101 | 100 | 102 |
| UL 94 V bei 1.0 mm Dicke | | V-0 | V-1 | V-1 | V-0 |
| Schmelzeviskosität 260°C [1000 s-1] | Pas | 204 | 225 | 189 | 201 |
| Schmelzeviskosität 260°C [1500 s-1] | Pas | 166 | 183 | 152 | 163 |
| MVR 240°C/5 kg | $cm^3/10min.$ | 14 | 12 | 16 | 15 |
| ΔMVR (hydr.) | % | 19 | 30 | 14 | 23 |
| ESC-Test (Toluol:Isopropanol) Randfaserdehnung, bei der Bruch auftritt | % | > 2,4 | > 2,4 | > 2,4 | > 2,4 |
| ESC-Test (Toluol:Isopropanol) Zeit bis zum Bruch | min | > 30 | > 30 | > 30 | > 30 |

**Patentansprüche**

**1.** Zusammensetzungen bestehend aus:

A) 40 bis 99 Gew.-Teile (jeweils bezogen auf die Summe der Gewichtsteile der Komponenten A+B+C+D) unverzweigtes aromatisches Polycarbonat und/oder unverzweigtes aromatisches Polyestercarbonat,
B) 0,5 bis 20 Gew.-Teile (jeweils bezogen auf die Summe der Gewichtsteile der Komponenten A+B+C+D) Pfropfpolymerisat, **dadurch gekennzeichnet, dass** die Pfropfgrundlage ein Silikonacrylat-Komposit-Kautschuk aus sich gegenseitig durchdringendem Silikonkautschuk- und Polyalkyl(meth)acrylatkautschuk ist, mit

B.1 5 bis 95 Gew.-% eines oder mehrerer Vinylmonomeren auf
B.2 95 bis 5 Gew.-% eines oder mehrerer Silikonacrylat- Komposit-Kautschuke als Pfropfgrundlage, wobei der Silikonacrylat-Kautschuk
B.2.1 65 - 95 Gew.-% Silikonkautschuk- und
B.2.2 35 bis 5 Gew.-% Polyalkyl(meth)acrylatkautschuk enthält,

wobei sich die beiden genannten Kautschuk-Komponenten B.2.1 und B.2.2 im Komposit-Kautschuk gegenseitig durchdringen, so dass sie sich nicht wesentlich voneinander trennen lassen.
C) 0,1 bis 20 Gew.-Teile (jeweils bezogen auf die Summe der Gewichtsteile der Komponenten A+B+C+D) Talk mit einen $d_{98}$-Wert von kleiner als 20 μm, bevorzugt kleiner als 15 μm, besonders bevorzugt kleiner als 8 μm,
D) 0,4 bis 20 Gew.-Teile (jeweils bezogen auf die Summe der Gewichtsteile der Komponenten A+B+C+D) Flammschutzmittel ausgewählt aus mindestens einem der Gruppe bestehend aus Mono- und oligomeren Phosphor- und Phosphonsäureester, Phosphonatamine und Phosphazene,
E) 0 bis 20 Gew.-Teile (bezogen auf die Summe der Gewichtsteile der Komponenten A+B+C+D) eines oder mehrere Polymere ausgewählt aus der Gruppe bestehend aus kautschukfreiem Vinyl(Co)Polymerisat, Polyalkylenterephthalat und von Komponente B verschiedene Pfropfpolymerisate,

F) 0,5 bis 25 Gew.-Teile (jeweils bezogen auf die Summe der Gewichtsteile der Komponenten A+B+C+D) Zusatzstoffe wie Flammschutzsynergisten, Antidrippingmittel, Gleit- und Entformungsmittel, Nukleiermittel, Stabilisatoren, Antistatika, Säuren, sowie Farbstoffe und Pigmente,

wobei alle Gewichtsteilangaben in der vorliegenden Anmeldung so normiert sind, dass die Summe der Gewichtsteile der Komponenten A+B+C+D in der Zusammensetzung 100 ergeben

**2.** Zusammensetzung gemäß Anspruch 1 enthaltend als Komponente C einen Talk mit einen $d_{98}$-Wert von kleiner als 15 $\mu$m.

**3.** Zusammensetzung gemäß Anspruch 1 enthaltend als Komponente C einen Talk mit einen $d_{98}$-Wert von kleiner als 8 $\mu$m.

**4.** Zusammensetzung gemäß Anspruch 1 enthaltend als Komponente C einen Talk mit einen $d_{50}$-Wert von 0,1 bis 4 $\mu$m.

**5.** Zusammensetzung gemäß Anspruch 1 enthaltend als Komponente C einen Talk mit einen $d_{50}$-Wert von 0,2 bis 2 $\mu$m.

**6.** Zusammensetzung gemäß Anspruch 1, wobei die Vinylmonomere B.1 ausgewählt sind aus mindestens einem der Gruppe bestehend aus Styrol, $\alpha$-Methylstyrol, Methylmethacrylat, n-Butylacrylat und Acrylnitril.

**7.** Zusammensetzung gemäß Anspruch 1 enthaltend als Komponente D mono- und oligomere Phosphor- bzw. Phosphonsäureester sind Phosphorverbindungen der Formel (VIII)

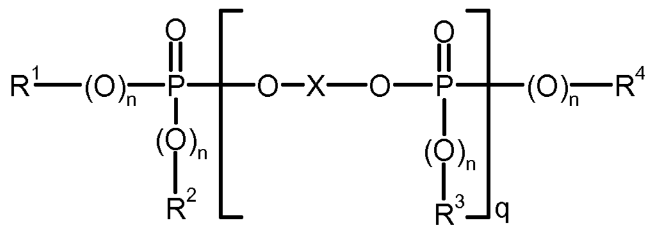

(VIII)

worin

$R^1$, $R^2$, $R^3$ und $R^4$, unabhängig voneinander jeweils gegebenenfalls halogeniertes $C_1$ bis $C_8$-Alkyl, jeweils gegebenenfalls durch Alkyl und/oder Halogen substituiertes $C_5$ bis $C_6$-Cycloalkyl, $C_6$ bis $C_{20}$-Aryl oder $C_7$ bis $C_{12}$-Aralkyl,
n unabhängig voneinander 0 oder 1,
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann,

bedeuten.

**8.** Zusammensetzung gemäß Anspruch 7, wobei

$R^1$, $R^2$, $R^3$ und $R^4$ für Kresyl, Phenyl, Xylenyl, Propylphenyl oder Butylphenyl steht,
n gleich 1 ist,
q für Werte von 0,5 bis 6 steht, und
X sich von Resorcin, Hydrochinon, Bisphenol A oder Diphenylphenol ableitet.

**9.** Zusammensetzung gemäß Anspruch 1 enthaltend als Komponente D Bisphenol-A basierendes Oligophosphat gemäß Formel (VIIIa),

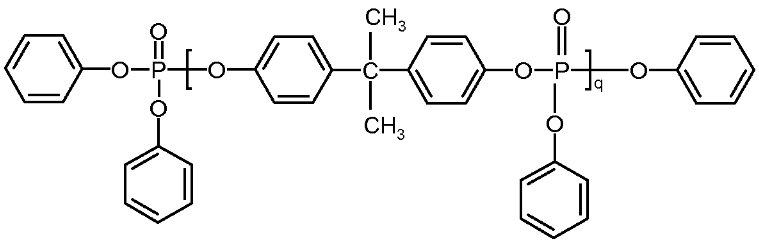

(VIIIa)

wobei q in Formel (VIIIa) für Werte von 1,05 bis 1,2 steht.

**10.** Zusammensetzung gemäß Anspruch 1, **dadurch gekennzeichnet, dass** die Zusatzstoffe ausgewählt sind aus der Gruppe, bestehend aus Flammschutzsynergisten, Antidrippingmittel, Gleit- und Entformungsmittel, Nukleiermittel, Stabilisatoren, Antistatika, Säuren, von Talk verschiedene Füll- und Verstärkungsstoffe sowie Farbstoffe und Pigmente.

**11.** Verwendung der Zusammensetzungen gemäß Anspruch 1 zur Herstellung von Formkörpern.

**12.** Formkörper, enthaltend eine Zusammensetzung nach einem der Ansprüche 1 bis 10.

**13.** Formkörper nach Anspruch 12 **dadurch gekennzeichnet, dass** der Formkörper ein Teil eines Kraftfahrzeugs, Schienenfahrzeugs, Luftfahrzeugs oder Wasserfahrzeugs oder Folien, Profile oder Gehäuseteile jeder Art ist.

## Claims

**1.** Compositions comprising

A) 40 to 99 parts by wt. (in each case based on the sum of the parts by weight of components A+B+C+D) of unbranched aromatic unbranched polycarbonate and/or unbranched aromatic polyester carbonate,
B) 0.5 to 20 parts by wt. (in each case based on the sum of the parts by weight of components A+B+C+D) of graft polymer, **characterized in that** the graft base is a silicone/acrylate composite rubber of mutually penetrating silicone rubber and polyalkyl (meth)acrylate rubber, with

B.1 5 to 95 wt.% of one or more vinyl monomers on
B.2 95 to 5 wt.% of one or more silicone/acrylate composite rubbers as graft base, wherein the silicone/acrylate rubber contains
B.2.1 65 - 95 wt.% of silicone rubber and
B.2.2 35 to 5 wt.% of polyalkyl (meth)acrylate rubber,

wherein the two rubber components B.2.1 and B.2.2 mentioned are mutually penetrating in the composite rubber, so that they cannot be separated substantially from one another,
C) 0.1 to 20 parts by wt. (in each case based on the sum of the parts by weight of components A+B+C+D) of talc having a $d_{98}$ value of less than 20 $\mu$m, preferably less than 15 $\mu$m, particularly preferably less than 8 $\mu$m,
D) 0.4 to 20 parts by wt. (in each case based on the sum of the parts by weight of components A+B+C+D) of flameproofing agent chosen from at least one of the group consisting of mono- and oligomeric phosphoric and phosphonic acid esters, phosphonatamines and phosphazenes,
E) 0 to 20 parts by wt. (based on the sum of the parts by wt. of components A+B+C+D) of one or more polymers chosen from the group consisting of rubber-free vinyl (co)polymer, polyalkylene terephthalate and graft polymers which differ from component B,
F) 0.5 to 25 parts by wt. (in each case based on the sum of the parts by weight of components A+B+C+D) of additives such as flame retardant synergists, antidripping agents, lubricants and mould release agents, nucleating agents, stabilizers, antistatic agents acids, dyes and pigments,

wherein all the parts by weight stated in the present application are standardized such that the sum of the parts by weight of components A+B+C+D in the composition is 100.

**2.** Composition according to claim 1, comprising as component C a talc having a $d_{98}$ value of less than 15 $\mu$m.

**3.** Composition according to claim 1, comprising as component C a talc having a $d_{98}$ value of less than 8 $\mu$m.

**4.** Composition according to claim 1, comprising as component C a talc having a $d_{50}$ value of from 0.1 to 4 $\mu$m.

**5.** Composition according to claim 1, comprising as component C a talc having a $d_{50}$ value of from 0.2 to 2 $\mu$m.

**6.** Composition according to claim 1, wherein the vinyl monomers B.1 are chosen from at least one of the group consisting of styrene, $\alpha$-methylstyrene, methyl methacrylate, n-butyl acrylate and acrylonitrile.

**7.** Composition according to claim 1, comprising as component D mono- and oligomeric phosphoric or phosphonic acid esters of the formula (VIII)

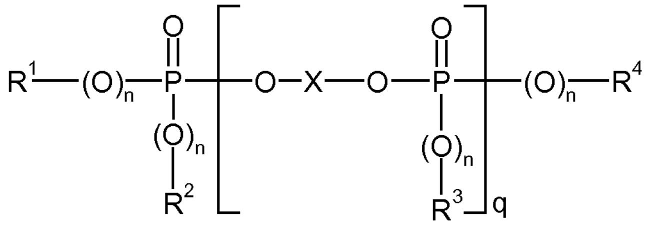

(VIII)

wherein

$R^1$, $R^2$, $R^3$ and $R^4$ independently of one another denote in each case optionally halogenated $C_1$ to $C_8$-alkyl, or $C_5$ to $C_6$-cycloalkyl, $C_6$ to $C_{20}$-aryl or $C_7$ to $C_{12}$-aralkyl in each case optionally substituted by alkyl and/or halogen,
n independently of one another denotes 0 or 1,
q denotes 0 to 30 and
X denotes a mono- or polynuclear aromatic radical having 6 to 30 C atoms, or a linear or branched aliphatic radical having 2 to 30 C atoms, which can be substituted by OH and can contain up to 8 ether bonds.

**8.** Composition according to claim 7, wherein

$R^1$, $R^2$, $R^3$ and $R^4$ represent cresyl, phenyl, xylenyl, propylphenyl or butylphenyl,
n is 1,
q represents values from 0.5 to 6 and
X is derived from resorcinol, hydroquinone, bisphenol A or diphenylphenol.

**9.** Composition according to claim 1, comprising as component D bisphenol A-based oligophosphate according to formula (VIIIa)

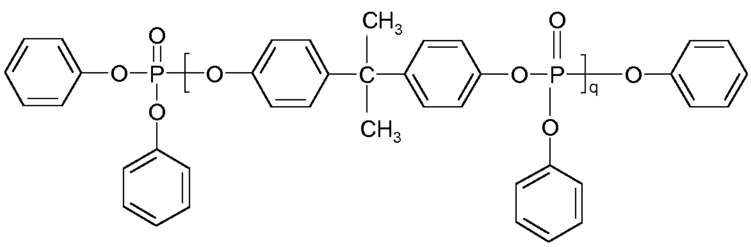

(VIIIa)

wherein q in formula (VIIIa) represents values from 1.05 to 1.2.

**10.** Composition according to claim 1, **characterized in that** the additives are chosen from the group consisting of flame retardant synergists, antidripping agents, lubricants and mould release agents, nucleating agents, stabilizers, antistatic agents, acids, dyes, pigments and filler/reinforcement substances which differ from talc.

**11.** Use of the compositions according to claim 1 for the production of shaped articles.

**12.** Shaped article comprising a composition according to one of claims 1 to 10.

**13.** Shaped article according to claim 12, **characterized in that** the shaped article is a part of a motor vehicle, rail vehicle, aircraft or aquatic vehicle or films, profiles or housing components of all types.

## Revendications

**1.** Compositions constituées de :

A) 40 à 99 parties en poids (chaque fois par rapport à la somme des parties en poids des composants A+B+C+D) de polycarbonate aromatique non ramifié et/ou de polyestercarbonate aromatique non ramifié,
B) 0,5 à 20 parties en poids (chaque fois par rapport à la somme des parties en poids des composants A+B+C+D) de polymérisat greffé, **caractérisé en ce que** la base de greffage est un caoutchouc composite silicone-acrylate à base de caoutchouc silicone et caoutchouc poly(méth)acrylate d'alkyle s'imbriquant mutuellement, comportant

B.1 5 à 95 % en poids d'un ou de plusieurs monomères vinyliques sur
B.2 95 à 5 % en poids d'un ou de plusieurs caoutchoucs composites silicone-acrylate en tant que base de greffage, le caoutchouc silicone-acrylate contenant
B.2.1 65-95 % en poids de caoutchouc silicone et
B.2.2 35 à 5 % en poids de caoutchouc poly(méth)acrylate d'alkyle,

les deux composants caoutchouc B.2.1 et B.2.2 nommés s'imbriquant mutuellement dans le caoutchouc composite, de sorte qu'ils ne peuvent pratiquement pas être séparés l'un de l'autre,
C) 0,1 à 20 parties en poids (chaque fois par rapport à la somme des parties en poids des composants A+B+C+D) de talc ayant une valeur d98 inférieure à 20 $\mu$m, de préférence inférieure à 15 $\mu$m, de façon particulièrement préférée inférieure à 8 $\mu$m,
D) 0,4 à 20 parties en poids (chaque fois par rapport à la somme des parties en poids des composants A+B+C+D) d'agent ignifuge choisi parmi au moins l'un du groupe constitué par des esters d'acide phosphorique et d'acide phosphonique monomères et oligomères, des phosphonatamines et des phosphazènes,
E) 0 à 20 parties en poids (par rapport à la somme des parties en poids des composants A+B+C+D) d'un ou de plusieurs polymères choisis dans le groupe constitué par un (co)polymérisat vinylique exempt de caoutchouc, un poly(alkylène-téréphtalate) et des polymérisats greffés différents du composant B,
F) 0,5 à 25 parties en poids (chaque fois par rapport à la somme des parties en poids des composants A+B+C+D) d'additifs tels que des agents synergiques ignifuges, des agents anticoulure, des lubrifiants et agents de démoulage, des agents de nucléation, des stabilisants, des agents antistatiques, des acides, ainsi que des colorants et des pigments,

dans la présente demande toutes les données en parties en poids étant normalisées de manière que la somme des parties en poids des composants A+B+C+D dans la composition soit égale à 100.

**2.** Composition selon la revendication 1, contenant en tant que composant C un talc ayant une valeur d98 inférieure à 15 $\mu$m.

**3.** Composition selon la revendication 1, contenant en tant que composant C un talc ayant une valeur d98 inférieure à 8 $\mu$m.

**4.** Composition selon la revendication 1, contenant en tant que composant C un talc ayant une valeur d50 de 0,1 à 4 $\mu$m.

**5.** Composition selon la revendication 1, contenant en tant que composant C un talc ayant une valeur d50 de 0,2 à 2 $\mu$m.

**6.** Composition selon la revendication 1, dans laquelle le monomère vinylique B.1 est choisi parmi au moins l'un du groupe constitué par le styrène, l'$\alpha$-méthylstyrène, le méthacrylate de méthyle, l'acrylate de n-butyle et l'acrylonitrile.

**7.** Composition selon la revendication 1, contenant en tant que composant D esters d'acide phosphorique et d'acide phosphonique monomères et oligomères des composés phosphorés de formule (VIII)

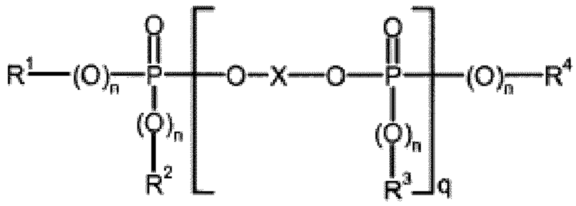

(VIII)

dans laquelle

R1, R2, R3 et R4 représentent chacun indépendamment les uns des autres un groupe alkyle en C1-C8 éventuellement halogéné, un groupe cycloalkyle en C5-C6, aryle en C6-C20 ou aralkyle en C7-C12, chacun éventuellement substitué par alkyle et/ou halogéno,
n représente chaque fois indépendamment 0 ou 1,
q représente 0 à 30 et
X représente un radical aromatique mono- ou polynucléaire ayant de 6 à 30 atomes de carbone, ou un radical aliphatique linéaire ou ramifié ayant de 2 à 30 atomes de carbone, qui peut être substitué par OH et comporter jusqu'à 8 liaisons éther.

**8.** Composition selon la revendication 7, dans laquelle

R1, R2, R3 et R4 représentent le groupe crésyle, phényle, xylényle, propylphényle ou butylphényle,
n est égal à 1,
q représente des valeurs de 0,5 à 6, et
X dérive du résorcinol, de l'hydroquinone, du bisphénol A ou du diphénylphénol.

**9.** Composition selon la revendication 1, contenant en tant que composant D un oligophosphate à base de bisphénol A, selon la formule (VIIIa),

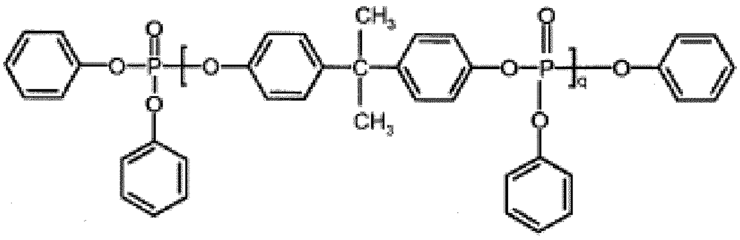

(VIIIa)

q dans la formule (VIIIa) représentant des valeurs de 1,05 à 1,2.

**10.** Composition selon la revendication 1, **caractérisée en ce que** les additifs sont choisis dans le groupe constitué par des agents synergiques ignifuges, des agents anticoulure, des lubrifiants et agents de démoulage, des agents de nucléation, des stabilisants, des agents antistatiques, des acides, des charges et matières de renforcement différents du talc ainsi que des colorants et des pigments,

**11.** Utilisation des compositions selon la revendication 1, pour la production de corps moulés.

**12.** Corps moulé, contenant une composition selon l'une quelconque des revendications 1 à 10.

**13.** Corps moulé selon la revendication 12, **caractérisé en ce que** le corps moulé est une pièce d'un véhicule automobile, véhicule sur rails, véhicule aérien ou véhicule aquatique ou consiste en des films, des profilés ou des pièces de boîtiers de tout type.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2002077417 A1
- JP 8259791 A
- JP 2000017136 A
- JP 2002069282 A
- WO 0039210 A
- EP 0641827 A
- JP 07316409 A
- DE 102006012990 A1
- DE S1495626 A
- DE 2232877 A
- DE 2703376 A
- DE 2714544 A
- DE 3000610 A
- DE 3832396 A
- DE 3077934 A
- DE 2842005 A
- US 3419634 A
- DE 3334782 A
- US 2891920 A
- US 3294725 A
- DE OS3631540 A
- EP 249964 A
- EP 430134 A
- US 4888388 A
- EP 0363608 A
- EP 0640655 A
- WO 0000541 A
- WO 0118105 A
- DE 2407674 A
- DE 2407776 A
- DE 2715932 A
- DE 1900270 A
- US 3692744 A


### In der Beschreibung aufgeführte Nicht-Patentliteratur


- **SCHNELL.** Chemistry and Physics of Polycarbonates. Interscience Publishers, 1964
- Ullmanns Enzyklopädie der technischen Chemie. 1979, vol. 18, 301 ff
- **HOUBEN-WEYL.** *Methoden der organischen Chemie,* vol. 12/1, 43
- *METHODEN DER ORGANISSHEN CGEMIE,* vol. 6, 177